# EUROPÄISCHE PATENTSCHRIFT

(11) **EP 0 771 690 B1**
(45) Veröffentlichungstag und Bekanntmachung des Hinweises auf die Patenterteilung: **22.11.2000**
(21) Anmeldenummer: 96115799.7
(22) Anmeldetag: 02.10.1996
(51) Int. Cl.: B60N 2/36

(54) **Sitz für Fahrzeuge**
Vehicle seat
Siège pour véhicules

(30) Priorität: 30.10.1995 DE 19540395
(43) Veröffentlichungstag der Anmeldung: 07.05.1997
(73) Patentinhaber: DaimlerChrysler AG, 70567 Stuttgart (DE)
(72) Erfinder: Lindner, Fritz, 55442 Stromberg (DE); Tsilchorozidis, Georgios, 70195 Stuttgart (DE)

(56) Entgegenhaltungen:
- EP-A- 0 697 307
- EP-A- 0 709 248
- DE-A- 2 923 550
- PATENT ABSTRACTS OF JAPAN vol. 016, no. 034 (M-1204), 28. Januar 1992 & JP 03 243446 A (HINO MOTORS), 30. Oktober 1991

## Beschreibung

Die Erfindung betrifft einen Sitz für Fahrzeuge, insbesondere Personenkraftwagen, gemäß dem Oberbegriff des Patentanspruchs 1.

Bei einem bekannten Sitz dieser Art (DE 29 23 550 A1) weist die Verriegelungsvorrichtung einen Übertragungshebel und einen Verriegelungshebel auf, die jeweils mit ihrem einen Hebelende drehfest auf einer in der Rückenlehne drehbar gelagerten, in Fahrzeugquerrichtung sich erstreckenden Schwenkachse befestigt sind. An dem anderen Hebelende des Übertragungshebels ist der Gurtumlenker rechtwinklig von diesem abstehend angeordnet, und das andere Hebelende des Verriegelungshebels trägt einen Rastbolzen, der in ein Rastloch einer an der Karosserieseitenwand befestigten Rastschiene einzufallen vermag. Eine am Verriegelungshebel angreifene Rückhaltefeder schwenkt im Normalfall den Verriegelungshebel weg von der Rastschiene und hindert somit den Rastbolzen am Einfallen in das Rastloch. Im Crashfall wird durch die Gurtzugkraft am Gurtumlenker der Übertragungshebel nach vorn geschwenkt, wodurch über die Schwenkachse der Verriegelungshebel gegen die Rückstellkraft der Rückhaltefeder nach oben geschwenkt wird und der Rastbolzen in das Rastloch einfällt. Dadurch werden die Gurtrückhaltekräfte direkt in die Fahrzeugkarosserie eingeleitet, und eine übergroße Beanspruchung des Lehnenrahmens tritt nicht auf. Um die Funktion der Verriegelungsvorrichtung auch bei verschiedenen Einstellungen der Rückenlehne in ihrer Neigung zur Vertikalen sicherzustellen, sind in der Rastschiene mehrere Rastlöcher hintereinander angeordnet, wobei jeweils ein Rastloch einer Neigungseinstellposition der Rückenlehne zugeordnet ist.

Werden solche Sitze als Fondsitze, z.B. bei Kombiwagen, verwendet, so wird die Rückenlehne umklappbar ausgebildet, um ggf. bei Nichtbesetzung der Fondsitze durch Umlegen der Rückenlehne auf das Sitzkissen des Sitzes und ggf. durch Anklappen des Sitzkissens an die Rückenlehne der Frontsitze den Laderaum des Fahrzeugs zu vergrößern. Bei Frontsitzen von zweitürigen Fahrzeugen sind ebenfalls die Rückenlehnen am Sitzkissen der Frontsitze umklappbar gehalten, um durch nach vorn Klappen der Rückenlehne den Zugang zu den Fondsitzen freizumachen. Bei solchen umklappbaren Rückenlehnen würde die seitlich an der Rückenlehne vorstehende Hebelmimik der Verriegelungsvorrichtung mit quer abstehendem Rastbolzen nicht nur mit der Karosserie-Seitenverkleidung, den Türarmlehnen etc., kollidieren, sondern auch bei unachtsamer Handhabung durch den Fahrgast Verletzungen auslösen.

Der Erfindung liegt die Aufgabe zugrunde, bei einem Sitz der eingangs genannten Art die im Crashfall wirksame Verriegelungsvorrichtung so zu verbessern, daß einerseits eine sichere Einleitung der Gurtkräfte in die Fahrzeugkarosserie im Crashfall und andererseits ein unbehindertes Umklappen der Rückenlehne ohne Verletzungsgefahr für den Bedienenden bei unbesetztem Sitz gewährleistet ist.

Die Aufgabe ist bei einem Sitz der im Oberbegriff des Patentanspruchs 1 definierten Gattung erfindungsgemäß durch die Merkmale im Kennzeichenteil des Patentanspruchs 1 gelöst.

Der erfindungsgemäße Sitz hat den Vorteil, daß die gesamte Verriegelungsvorrichtung in der Rückenlehne integriert ist und nur bei Wirksamwerden der Verriegelungsvorrichtung im Crashfall oder bei extrem starkem Bremsen, also dann, wenn das Sicherheitsgurtsystem zur Rückhaltung des Fahrzeuginsassens durch Überschreiten eines bestimten Wertes der Fahrzeugverzögerung aktiviert wird, der Verriegelungsbolzen aus der Rückenlehne weiter hervortritt und die crashsichere Anbindung der Rückenlehne an die Fahrzeugkarosserie hochstabil vornimmt. Das Wirksamwerden der Verriegelungsvorrichtung setzt voraus, daß der Sitz benutzt und der Sicherheitsgurt vom Fahrzeuginsassen angelegt ist.

Um ein Umklappen der Rückenlehne bei unbesetztem Sitz zu vermeiden, kann eine zusätzliche übliche Verriegelung zwischen Rückenlehne und Fahrzeugkarosserie vorgesehen werden, die beim Umklappen von Hand gelöst werden muß. Eine solche Verriegelung kann aber sehr leicht und kostengünstig realisiert werden, da sie im Crashfall nur geringe, vom Gewicht der Rückenlehne abhängige Kräfte aufnehmen muß.

Vorteilhafte Ausführungsformen des erfindungsgemäßen Sitzes mit zweckmäßigen Weiterbildungen und Ausgestaltungen der Erfindung sind in den weiteren Patentansprüchen angegeben.

Die Erfindung ist anhand eines in der Zeichnung dargestellten Ausführungsbeispiels im folgenden näher beschrieben. Es zeigen:
- Fig. 1: ausschnittweise eine Seitenansicht eines Sitzes für einen Personenkraftwagen,
- Fig. 2: ausschnittweise eine Ansicht des Sitzes gemäß Pfeil II in Fig. 1,
- Fig. 3: einen Schnitt längs der Linie III-III in Fig. 1,
- Fig. 4: einen Schnitt längs der Linie IV-IV in Fig. 2.

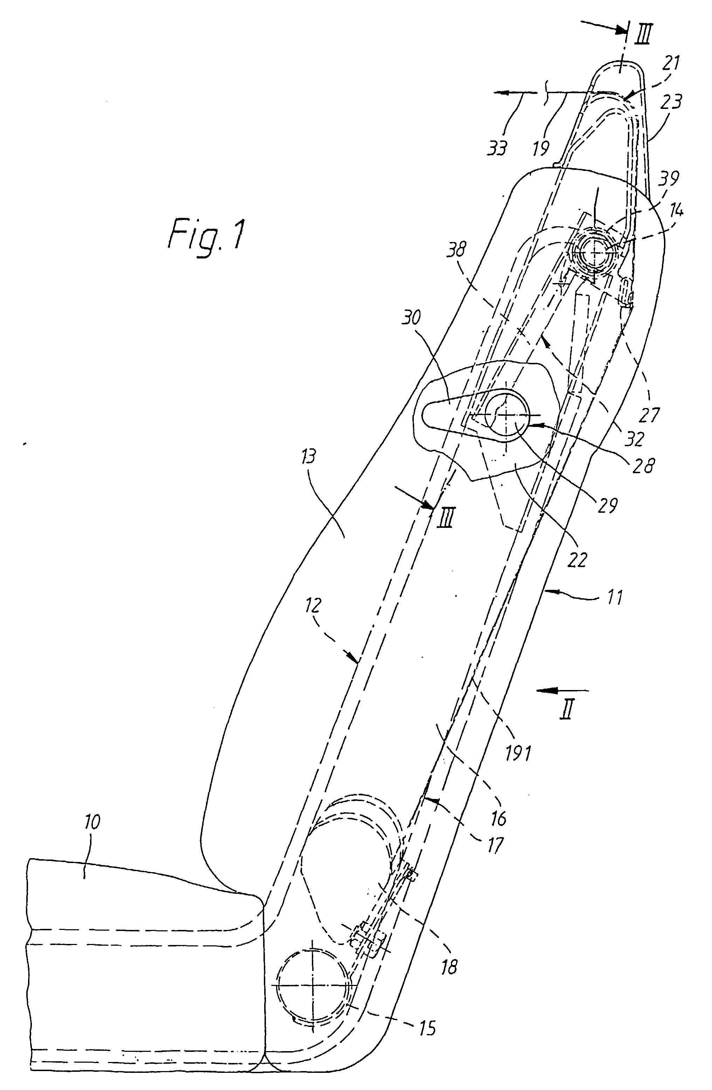

Der in Fig. 1 ausschnittweise in Seitenansicht dargestellte Fahrzeugsitz für einen Personenkraftwagen weist in bekannter Weise ein Sitzkissen 10 und eine Rückenlehne 11 auf, die - wie hier nicht weiter dargestellt ist - am Sitzkissen 10 um eine in Fahrzeugquerrichtung sich erstreckende Schwenkachse schwenkbar gehalten und mit ihrer Vorderseite auf die Sitzkissenoberfläche aufklappbar ist. Die Rückenlehne 11 weist einen Lehnenrahmen 12 und ein Lehnenpolster 13 auf, das auf einem im Lehnenrahmen 12 gehaltenen Federkern (hier nicht dargestellt) aufliegt und von einem Polsterbezug überspannt ist, der auch die Rückseite des Lehnenrahmens 12 kaschiert. Der Lehnenrahmen 12 besteht aus einem oberen Querrohr 14, einem unteren Querrohr 15 und zwei die beiden Querrohre 14,15 miteinander verbindenden Seitenholmen 16, von denen in den Figuren der Zeichnung jeweils nur der linke Seitenholm 16 zu sehen ist.

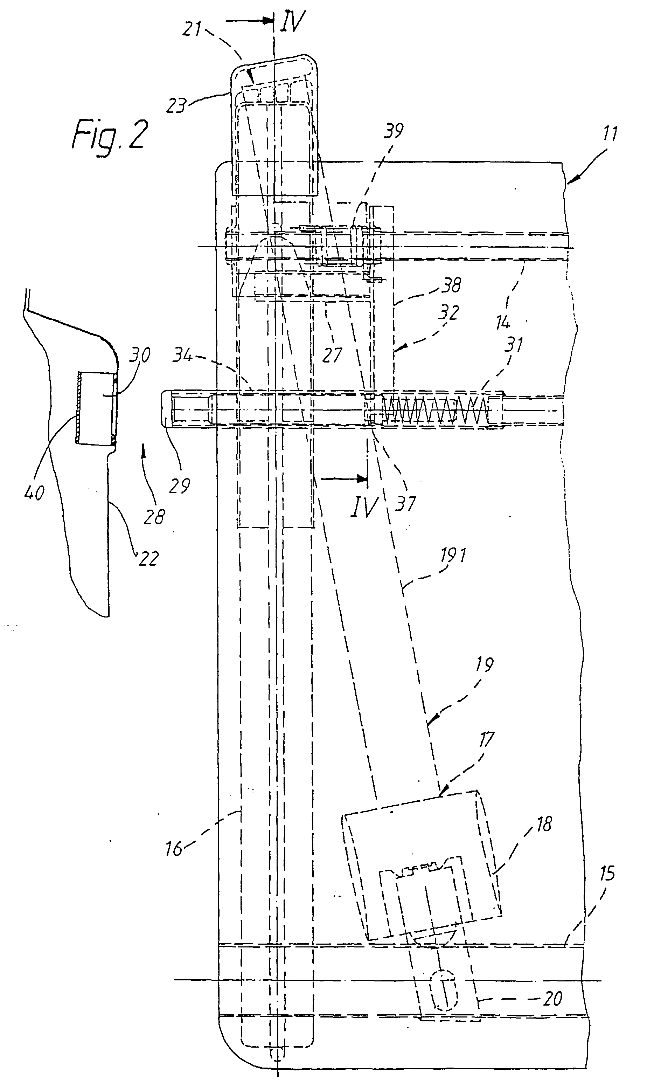

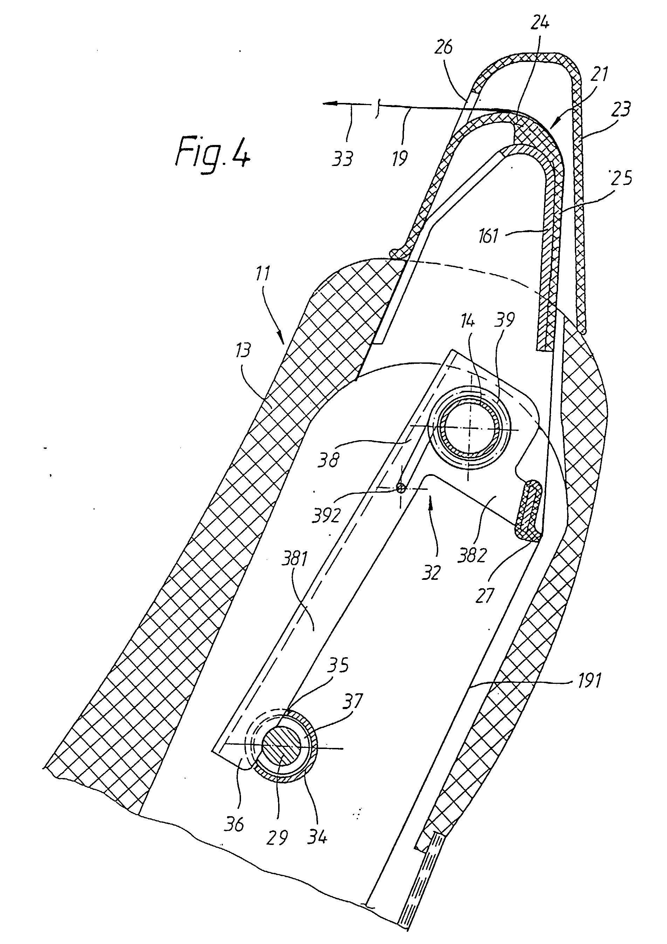

Dem Fahrzeugsitz ist ein Sicherheitsgurtsystem 17 zur Rückhaltung eines auf dem Sitz sitzenden Fahrzeuginsassen zugeordnet, das in bekannter Weise einen Gurtaufrollautomaten mit im Crashfall wirksamer Gurtauszugssperre, dem sog. Retraktor 18, einen aus dem Retraktor 18 ausziehbaren Sicherheitsgurt 19 sowie ein hier nicht dargestelltes Gurtschloß aufweist, das am Fahrzeugboden verankert ist und in das in bekannter Weise eine am Sicherheitsgurt 19 gehaltene Schloßzunge nach Anlegen des Sicherheitsgurtes 19 durch den Fahrzeuginsassen eingesteckt wird. Der Retraktor 18 ist mittels einer Lasche 20 am unteren Querrohr 15 des Lehnenrahmens 12 befestigt und der aus dem Retraktor 18 ausgezogene Sicherheitsgurt 19 ist über einen oberhalb der Schulter des Fahrzeuginsassens an der Rückenlehne 12 angeordneten Gurtumlenker 21 geführt und verläuft von hier über die Brust des Fahrzeuginsassens. Zur Realisierung des Gurtumlenkers 21 steht der der Karosserieseitenwand, die in Fig. 1 und 2 mit 22 angedeutet ist, naheliegende Seitenholm 16 des Lehnenrahmens 12, hier also der linke Seitenholm 16, über die Oberkante des Lehnenpolsters 13 vor und trägt auf seinem Vorstehende 161 eine bis zum Lehnenpolster 13 reichende Kappe 23, in der der Gurtumlenker 21 als Quersteg 24 ausgebildet ist. Wie in Fig. 4 am deutlichsten zu sehen ist, läuft der vom Retraktor 18 kommende Sicherheitsgurt 19 von unten her in die Kappe 23 ein, liegt auf einer in der Kappe 23 ausgebildeten Führungsfläche 25 auf, die sich auf der Rückseite des Vorstehendes 161 des Seitenholms 16 abstützt und tritt durch eine in der Vorderseite der Kappe 23 angeordnete Durchtrittsöffnung 26 auf die Vorderseite der Rückenlehne 11 hindurch. Der Sicherheitsgurt 19 ist dabei vor Eintreten in die Kappe 23 über ein Gleitprofil 27 einer nachfolgend im einzelnen noch beschriebenen Verriegelungsvorrichtung 28 geführt, wobei das Gleitprofil 27 so angeordnet ist, daß der zwischen Retraktor 18 und Gurtumlenker 21 sich erstreckende Gurtabschnitt 191 des Sicherheitsgurts 16 im Bereich des Gleitprofils 27 stumpfwinklig abknickt, also der vom Retraktor 18 bis zum Gleitprofil 27 reichende Teil des Gurtabschnitts 191 mit dem vom Gleitprofil 27 bis zum Gurtumlenker 21 reichenden Teil des Gurtabschnitts 191 einen stumpfen Winkel einschließt, in dem das Gleitprofil 27 liegt.

Die Verriegelungsvorrichtung 28 dient dazu, bei Fahrzeugunfall oder bei extrem starkem Bremsen, wenn also die Gurtauszugssperre im Retraktor 18 des Sicherheitsgurtsystems 17 wirksam und der Fahrzeuginsasse durch den Sicherheitsgurt 19 am Sitz zurückgehalten wird, die Rückenlehne 11 an der Fahrzeugkarosserie festzulegen und damit die Rückhaltekräfte des Sicherheisgurtsystems 17, die auf die Rückenlehne 12 wirken, unmittelbar in die Fahrzeugkarosserie einzuleiten. Hierzu weist die Verriegelungsvorrichtung 28 einen in der Rückenlehne 12 in Querrichtung hin zur Karosserieseitenwand 22 axial verschieblichen Verriegelungsbolzen 29, ein in der Karosserieseitenwand 22 (Fig. 1 und 2) angeordnetes Fangloch 30 zum Eintauchen des freien Endes des Verriegelungsbolzens 29, eine den Verriegelungsbolzen 29 beaufschlagende Antriebsfeder 31, die den Verriegelungsbolzen 29 bei Freigabe in Richtung zum Fangloch 30 hin verschiebt, und eine Sperreinheit 32 auf, die den Verriegelungsbolzen 29 bei gespannter Antriebsfeder 31 in seiner Grundstellung blockiert, in welcher der Verriegelungsbolzen 29 außer Eingriff mit dem Fangloch 30 ist. Die Sperreinheit 32 ist an dem zwischen dem Retraktor 18 und dem Gurtumlenker 21 in der Rückenlehne 12 verlaufenden Gurtabschnitt 191 des Sicherheitsgurtes 19 so angekoppelt, daß sie bei wirksamer Gurtauszugssperre des Retraktors 18 infolge einer am Sicherheitsgurt 19 angreifende Zugkraft 33 (Fig. 1 und 4) den Verriegelungsbolzen 29 zum axialen Verschieben durch die Antriebsfeder 31 in das Fangloch 30 hinein freigibt.

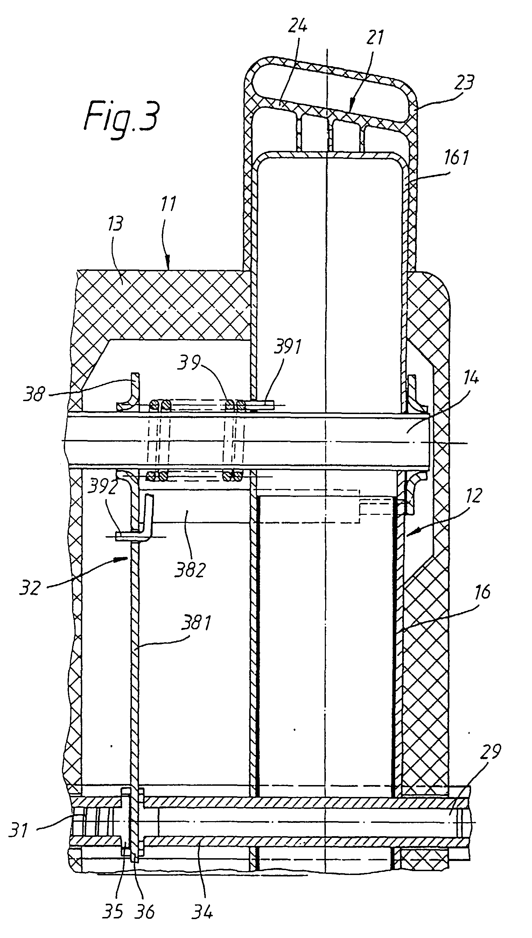

Wie aus Fig. 2 und 3 ersichtlich, ist der Verriegelungsbolzen 29 in einer in der Rückenlehne 11, und zwar in dem linken Seitenholm 16 des Fahrzeugrahmens 12, befestigten Führungshülse 34 axial verschieblich geführt. Die Antriebsfeder 31 ist als Druckfeder ausgebildet, die in der Führungshülse 34 einliegt und sich einerseits an dem einen Stirnende des Verriegelungsbolzens 29 und andererseits an der Führungshülse 34 abstützt. Die Führungshülse 34 weist eine über einen Teil ihre Umfangs sich erstreckende Ausnehmung 35 auf, deren axiale Breite geringfügig größer als die Dicke eines Sperrglieds 36 der Sperreinheit 32 bemessen ist, so daß das Sperrglied 36 durch die Ausnehmung 35 in das Innere der Führungshülse 34 hinein hindurchtreten kann. Am Verriegelungsbolzen 29 ist im geringen Abstand von seinem von der Antriebsfeder 31 belasteten Stirnende eine umlaufende Rastnut 37 vorgesehen, deren axiale Breite ebenfalls geringfügig größer als die Dicke des Sperrglieds 36 ist. Die Ausnehmung 35 und die Rastnut 37 sind räumlich einander so zugeordnet, daß sie in der Grundstelllung des Verriegelungsbolzens 29, in welcher dieser unter Spannung der Antriebsfeder 31 das Fangloch 20 in der Karosserieseitenwand 22 freigibt, in der gleichen Querschnittsebene von Verriegelungsbolzen 26 und Führungshülse 34 liegen, so daß das Sperrglied 36 der Sperreinheit 32 durch die Ausnehmung 35 hindurch in die Rastnut 37 einfallen und den Verriegelungsbolzen 29 in seiner Grundstellung gegen Axialverschiebung blockieren kann.

Die zu ihrer Auslösung an den Sicherheitsgurt 19 angekoppelte Sperreinheit 32 weist einen Winkelhebel 38 mit einem langen Schenkel 381 und einem davon rechtwinklig abstehenden kurzen Schenkel 382 auf. Der Winkelhebel 38 ist auf dem oberen Querrohr 14 des Lehnenrahmens 12 drehbar gelagert. Eine ebenfalls auf dem Querrohr 14 aufgeschobene Drehfeder 39 stützt sich mit ihrem einen Schenkel 391 an dem Seitenholm 16 und mit ihrem anderen Schenkel 392 an dem langen Schenkel 381 des Winkelhebels 38 ab. Der lange Schenkel 381 trägt an seinem freien Ende das Sperrglied 36, das bevorzugt vom Ende des langen Schenkels 381 selbst gebildet ist, und die Federvorspannung der Drehfeder 39 ist so gerichtet, daß sie den Winkelhebel 38 in einer Drehrichtung beaufschlagt, in welcher das Sperrglied 36 in die Rastnut 37 im Verriegelungsbolzen 29 hineingedrückt wird. Der kurze Schenkel 382 des Winkelhebels 38 trägt endseitig das bereits angesprochene Gleitprofil 27, das bei durch die Sperreinheit 32 in seiner Grundstellung verrastetem Verriegelungsbolzen 29 sich so an den Gurtabschnitt 191 des Sicherheitsgurtes 19 andrückt, daß in dem Gurtabschnitt 191 der beschriebene stumpfe Winkel ausgebildet wird. Wie aus Fig. 2 entnommen werden kann, ist die Breite des Gleitprofils 27 (in Lehnenquerrichtung gesehen) größer bemessen als die Breite des Sicherheitsgurts 19, so daß letzterer sicher auf dem Gleitprofil 27 aufliegt. Die Federvorspannung der Drehfeder 39 ist nunmehr so ausgelegt, daß bei einer normalen Zugkraft 33 am Sicherheitsgurt 19, wie sie beim üblichen Ausziehen des Sicherheitsgurtes 19 aus dem Retraktor 18 zwecks Anlegen des Sicherheitsgurtes 19 auftritt, die von dem Gurtabschnitt 191 auf das Gleitprofil 27 ausgeübte Reaktionskraft den Winkelhebel 38 nicht zu drehen vermag. Erst wenn das Sicherheitsgurtsystem 17 bei extrem starker Fahrzeugverzögerung anspricht, also die Gurtauszugsperre im Retraktor 18 wirksam ist und damit die Zugkraft 33 am Sicherheitsgurt 19 einen bestimmten Wert übersteigt (z.B. 4000 N), kann die vom Sicherheitsgurt 19 auf das Gleitprofil 27 aufgebrachte Reaktionskraft die Federkraft der Drehfeder 39 überwinden, und der Winkelhebel 38 wird gegen die Vorspannung der Drehfeder 39 (in Fig. 1 im Uhrzeigersinn) geschwenkt, wodurch das Sperrglied 36 am Ende des langen Schenkels 381 aus der Rastnut 37 des Verriegelungsbolzens 29 ausgehoben wird. Der nunmehr freigegebene Verriegelungsbolzen 29 wird unter der Kraft der expandierenden Druckfeder 31 in der Führungshülse 34 nach außen geschoben und dringt in das Fangloch 30 in der Karosserieseitenwand 22 ein. Der Verschiebeweg des Verriegelungsbolzens 29 wird dabei durch einen am Grund des Fanglochs 30 angeordneten Anschlag 40 begrenzt. Damit ist der Lehnenrahmen 12, und insbesondere der den Gurtumlenker 21 tragende Seitenholm 16, hochstabil mit der Karosserieseitenwand 22 verbunden, und die vom Sicherheitsgurt 19 über den Gurtumlenker 21 in den Seitenholm 16 eingeleiteten Rückhaltekräfte werden unmittelbar in die Fahrzeugkarosserie weitergeleitet.

Die Entriegelung von Rückenlehne 12 und Karosserieseitenwand 22 erfolgt von Hand, wozu der Verriegelungsbolzen 29 soweit in die Führungshülse 34 zurückzuschieben ist, bis das von der Drehfeder 39 belastete Sperrglied 36, das in der Ausnehmung 35 in der Führungshülse 34 ein- und am Umfang des Verriegelungsbolzen 29 anliegt, in die Rastnut 37 einschnappt.

## Patentansprüche

1. Sitz für Fahrzeuge, insbesondere Personenkraftwagen, mit einem Sitzkissen und einer daran schwenkbar befestigten Rückenlehne (11), die vorzugsweise bis auf das Sitzkissen (10) umklappbar ist, mit einem Sicherheitsgurtsystem (17) zur Rückhaltung eines auf dem Sitz sitzenden Fahrzeuginsassen, das einen an der Rückenlehne befestigten Gurtaufrollautomaten mit Gurtauszugssperre (18), einen daraus ausziehbaren Sicherheitsgurt (19) sowie einen an der Rückenlehne (11) angeordneten Gurtumlenker (21) aufweist, über den der aus dem Gurtaufrollautomaten (18) ausgezogene Sicherheitsgurt (19) geführt ist, und mit einer über den Sicherheitsgurt auslösbaren Verriegelungsvorrichtung (28) zum Festlegen der Rückenlehne (11) an der Fahrzeugkarosserie,
**dadurch gekennzeichnet,**
daß die Verriegelungsvorrichtung (28) einen in der Rückenlehne (11) in Querrichtung axial verschieblichen Verriegelungsbolzen (29) für ein in der Karosserieseitenwand (22) angeordnetes Fangloch (30) zum Eintauchen des freien Endes des Verriegelungsbolzens (29) aufweist, eine den Verriegelungsbolzen (29) in Richtung zum Fangloch (30) hin beaufschlagende Antriebsfeder (31), die in einer das Fangloch (30) freigebenden Grundstellung des Verriegelungsbolzens (29) gespannt ist, und eine den Verriegelungsbolzen (29) in dessen Grundstellung gegen Axialverschiebung blockierende Sperreinheit (32) aufweist, die an einem zwischen Gurtaufrollautomaten (18) und Gurtumlenker (21) sich erstreckenden Gurtabschnitt (191) des Sicherheitsgurts (19) so angekoppelt ist, daß sie infolge einer bei wirksamer Gurtauszugssperre am Sicherheitsgurt (19) angreifenden Zugkraft (33) den Verriegelungsbolzen (29) freigibt.

2. Sitz nach Anspruch 1,
**dadurch gekennzeichnet,**
daß der Verriegelungsbolzen (29) in einer in der Rückenlehne (11) gehaltenen, bis mindestens zur Rückenlehnenseite reichenden Führungshülse (34) axial verschieblich geführt ist, daß die Antriebsfeder (31) als eine in der Führungshülse (34) eingeschobene Druckfeder ausgebildet ist, die sich einerseits an dem einen Stirnende des Verriegelungsbolzens (29) und andererseits in der Führungshülse (34) abstützt, daß die Führungshülse (34) eine über einen Teilumfang sich erstreckende Ausnehmung (35) zum Durchtritt eines Sperrglieds (36) der Sperreinheit (32) und der Verriegelungsbolzen (29) eine umlaufende Rastnut (37) zum Eintauchen des Sperrglieds (36) aufweist, und daß die Ausnehmung (35) in der Führungshülse (34) und die Rastnut (37) im Verriegelungsbolzen (29) so angeordnet sind, daß sie bei in Grundstellung befindlichem Verriegelungsbolzen (29) in der gleichen, rechtwinklig zu den Achsen von Führungshülse (34) und Verriegelungsbolzen (29) ausgerichteten Querschnittsebene liegen.

3. Sitz nach Anspruch 1 oder 2,
**dadurch gekennzeichnet,**
daß die Sperreinheit (32) einen um eine zum Verriegelungsbolzen (29) parallele Schwenkachse schwenkbar angeordneten Winkelhebel (38), dessen einer langer Schenkel (381) das Sperrglied (36) und dessen anderer kurzer Schenkel (382) ein an dem Sicherheitsgurt (10) anliegendes Gleitprofil (27) trägt, und eine Sperrfeder (Drehfeder 39) aufweist, die den Winkelhebel (38) so belastet, daß das Sperrglied (36) in die Rastnut (37) eintaucht, und daß der Winkelhebel (38) relativ zum Sicherheitsgurt (19) so angeordnet ist, daß bei in die Rastnut (37) eingreifendem Sperrglied (36) das am Sicherheitsgurt (19) anliegende Gleitprofil (27) dem zwischen Gurtaufrollautomaten (18) und Gurtumlenker (21) sich erstreckenden Gurtabschnitt (191) einen stumpfwinkligen Verlauf aufzwingt, wobei der stumpfe Winkel am Gleitprofil (27) ausgebildet ist.

4. Sitz nach einem der Ansprüche 1 - 3,
**dadurch gekennzeichnet,**
daß die Rückenlehne (11) einen Lehnenrahmen (12) mit einem unteren und oberen Querrohr (14,15) und zwei die Querrohre (14,15) miteinander verbindenden Seitenholmen (16) sowie ein den Lehnenrahmen (12) überspannendes Lehnenpolster (13) aufweist und daß der der Karosserieseitenwand (22) nächstliegende Seitenholm (16) über die Oberkante des Lehnenpolsters (13) vorsteht und auf seinem Vorstehende (161) eine bis zum Lehnenpolster (13) reichende Kappe (23) trägt, in der ein den Gurtumlenker (21) bildender Quersteg (24) ausgebildet ist.

5. Sitz nach Anspruch 4,
**dadurch gekennzeichnet,**
daß auf der Rückseite des Vorstehendes (161) des Seitenholms (16) sich eine in der Kappe (23) ausgebildete Führungsfläche (25) für den Sicherheitsgurt (19) abstützt und daß in der der Lehnenvorderseite zugekehrten Vorderseite der Kappe (23) eine Durchtrittsöffnung (26) für den Sicherheitsgurt (19) angeordnet ist.

6. Sitz nach Anspruch 3 und 4 oder 5,
**dadurch gekennzeichnet,**
daß der Winkelhebel (38) nahe dem den Gurtumlenker (21) tragenden Seitenholm (16) drehbar auf dem oberen Querrohr (14) angeordnet ist, daß die Sperrfeder als eine auf dem oberen Querrohr (14) sitzende Drehfeder (39) ausgebildet ist, die sich einerseits am Seitenholm (16) und andererseits am langen Schenkel (381) des Winkelhebels (38) abstützt, und daß das am kurzen Schenkel (382) des Winkelhebels (38) gehaltene Gleitprofil (27) eine Länge hat, die größer ist als die Breite des Sicherheitsgurts (19).

7. Sitz nach Anspruch 6,
**dadurch gekennzeichnet,**
daß die Federvorspannung der Drehfeder (39) so bemessen ist, daß die das Sperrglied (36) in der Rastnut (37) des Verriegelungsbolzens (29) haltende Federkraft wenig kleiner ist als die auf das Gleitprofil (27) in Schwenkrichtung des Winkelhebels (38) wirkende minimale Reaktionskraft des Sicherheitsgurtes (19), die mit Wirksamwerden der Gurtauszugssperre im Gurtaufrollautomaten (18) durch extreme Fahrzeugverzögerung hervorgerufen wird.

8. Sitz nach einem der Ansprüche 4 - 7,
**dadurch gekennzeichnet,**
daß der Gurtaufrollautomat (18) am unteren Querrohr (15) des Lehnenrahmens (12) befestigt ist.

9. Sitz nach einem der Ansprüche 1 - 8,
**dadurch gekennzeichnet,**
daß im Lochgrund des Fanglochs (30) ein den Verschiebeweg des Verriegelungsbolzens (29) begrenzender Anschlag (40) angeordnet ist.

10. Sitz nach einem der Ansprüche 3 - 9,
**dadurch gekennzeichnet,**
daß das Sperrglied (36) vom freien Ende des langen Schenkels (381) des Winkelhebels (38) selbst gebildet ist.

## Claims

1. Seat for vehicles, in particular passenger cars, with a seat cushion and a backrest (11) attached and able to tilt relative thereto, which can preferably be tilted down onto the seat cushion (10), and having a safety-belt system (17) to retain an occupant of the vehicle sitting on the seat, which comprises an automatic belt retractor (18) with a device that blocks the run-out of the belt, a safety-belt (19) that can be pulled out therefrom, and a belt guide (21) positioned on the backrest (11), over which the safety-belt (19) pulled out of the automatic belt retractor (18) is passed, and with a locking mechanism (28) activated by the safety-belt to secure the backrest (11) relative to the vehicle body,
**characterised in that**
the locking mechanism (28) comprises a locking bolt (29) for a detent hole (30) arranged on the side-wall (22) of the vehicle which receives the free end of the locking bolt (29), a drive spring (31) which acts upon the locking bolt (29) to push it towards the detent hole (30), the said spring being compressed when the locking bolt (29) is in a starting position in which it is disengaged from the detent hole (30), and a blocking unit (32) which blocks the locking bolt (29) in the said starting position and prevents its axial movement, which is coupled with a belt segment (191) of the safety-belt (19) extending between the automatic belt retractor (18) and the belt guide (21) in such a way that, as the result of a tension force (33) acting on the safety-belt (19) when the device that blocks the run-out of the belt is active, the locking bolt (29) is released.

2. Seat according to Claim 1,
**characterised in that**
the locking bolt (29) is guided and can move axially within a guide sleeve (34) located within the backrest (11) and extending at least to the side of the backrest, the drive spring (31) is formed as a compression spring which is pressed into the guide sleeve (34) and which rests at one end against the locking bolt (29) and at the other end against the guide sleeve (34), the guide sleeve (34) has extending over part of its circumference a cut-out (35) to allow the passage of a blocking element (36) of the blocking unit (32), the locking bolt (29) has a circumferential detent groove (27) to receive the blocking element (36), and the cut-out (35)in the guide sleeve (34) and the detent groove (27) of the locking bolt (29) are positioned such that when the locking bolt (29) is in its starting position they lie in the same transverse plane at right-angles to the axes of the guide sleeve (34) and the locking bolt (29).

3. Seat according to Claims 1 or 2,
**characterised in that**
the blocking unit (32) comprises an angled lever (38) that can tilt about a tilt axis parallel to the locking bolt (29), whose longer shank (381) carries the blocking element (36) and whose other, shorter shank (382) carries a slide-bar (27) which is in contact with the safety-belt (10), and also comprises a blocking spring (torsion spring 39) which spring-loads the angled lever (38) such that the blocking element (36) is engaged within the detent groove (37), and the angled lever (38) is positioned relative to the safety-belt (19) such that when the blocking element (36) is engaged in the detent groove (37) the slide-bar (27) in contact with the safety-belt (19) produces an obtuse angle in the belt segment (191) between the automatic belt retractor (18) and the belt guide (21), the said obtuse angle being formed against the said slide-bar (27).

4. Seat according to any of Claims 1 to 3,
**characterised in that**
the backrest (11) comprises a backrest frame (12) with upper and lower transverse tubes (14, 15) and two lateral struts (16) which connect the upper and lower transverse tubes (14, 15) to one another, and also comprises a backrest pad (13) spanning across the backrest frame (12), and the lateral strut (16) nearest the side-wall (22) of the body projects above the backrest pad (13) and, on its projecting end (161), carries a cap (23) extending down to the backrest pad (13) in which the transverse web (24) forming the belt guide (21) is located.

5. Seat according to Claim 4,
**characterised in that**
the rear side of the projecting end (161) of the lateral strut (16) supports a guide surface (25) for the safety-belt (19) located inside the cap (23), and in the front side of the cap (23) facing towards the front side of the backrest, an aperture (26) is provided for the safety-belt (19) to pass through.

6. Seat according to Claims 3, 4 or 5,
**characterised in that**
the angled lever (38) is arranged so as to rotate about the upper transverse tube (14) close to the lateral strut (16) carrying the belt guide (21), the blocking spring is formed as a torsion spring (39) fitted onto the upper transverse tube (14) with one arm of the spring resting against the lateral strut (16) and the other end against the longer shank (381) of the angled lever (38), and the slide-bar (27) on the shorter shank (382) of the angled lever (38) has a length greater than the width of the safety-belt (19).

7. Seat according to Claim 6,
**characterised in that**
the spring pre-stress of the torsion spring (39) is chosen such that the spring force holding the blocking element (36) in the detent groove (37) of the locking bolt (29) is slightly smaller than the minimum reaction force of the safety-belt (19) acting on the sliding section (27) in the tilt direction of the angled lever (38), produced when the belt run-out blocking device in the automatic belt retractor (18) is activated by an extremely sharp deceleration of the vehicle.

8. Seat according to any of Claims 4 to 7,
**characterised in that**
the automatic belt retractor (18) is attached on the lower transverse tube (15) of the backrest frame (12).

9. Seat according to any of Claims 1 to 8,
**characterised in that**
at the bottom of the detent hole (30) is positioned an end-stop (40) which limits the displacement movement of the locking bolt (29).

10. Seat according to any of Claims 3 to 9,
**characterised in that**
the blocking element (36) is formed by the free end of the long shank (381) of the angled lever (38) itself.

## Revendications

1. Siège pour véhicules, en particulier voitures particulières, avec un coussin d'assise et un dossier (11) lui étant fixé, de façon à pouvoir pivoter, susceptible d'être rabattu de préférence jusqu'au coussin d'assise (10), avec un système de ceinture de sécurité (17) pour assurer la retenue d'un passager du véhicule assis sur le siège, présentant un dispositif enrouleur de ceinture fixé au dossier, avec un mécanisme de verrouillage d'extraction de ceinture (18), une ceinture de sécurité (19) pouvant en être extrait, un élément de renvoi de ceinture (21) disposé sur le dossier (11), par l'intermédiaire duquel la ceinture de sécurité (17) extraite du dispositif enrouleur de ceinture (18) est guidée, et avec un dispositif de verrouillage (28), susceptible d'être déclenché par l'intermédiaire de la ceinture de sécurité, pour fixer le dossier (11) à la carrosserie du véhicule,
caractérisé en ce que
le dispositif de verrouillage (28) présente un boulon de verrouillage (29), mobile axialement dans la direction transversale, dans le dossier de siège (11), pour un trou d'emprisonnement (30) disposé dans la paroi latérale (22) du véhicule, pour permettre la pénétration de l'extrémité libre du boulon de verrouillage (29), un ressort d'entraînement (31) sollicitant le boulon de verrouillage (29) dans la direction du trou d'emprisonnement (30), le ressort étant contraint lorsque le boulon de verrouillage (29) se trouve en une position de base dans laquelle le trou d'emprisonnement (30) est libéré, et présentant une unité de blocage (32), bloquant le boulon de verrouillage (29) contre tout déplacement axial lorsqu'elle se trouve à sa position de base, unité de blocage accouplée à un tronçon de ceinture (191), s'étendant entre le dispositif enrouleur (18) et l'élément de renvoi de ceinture (21), de la ceinture de sécurité (19), en ce que l'unité de blocage (32) libère le boulon de verrouillage (29) par suite de l'action d'une force de réaction (33) sur la ceinture de sécurité (19), lorsque le mécanisme de verrouillage d'extraction de ceinture entre en action.

2. Siège selon la revendication 1, caractérisé en ce que le boulon de verrouillage (29) est guidé, de façon mobile axialement, dans une douille de guidage (34) maintenue sur le dossier de siège (11), allant au moins juqu'au côté du dossier, en ce que le ressort d'entraînement (31) est réalisé sous la forme de ressort de compression, inséré dans la douille de guidage (34), ressort prenant appui, d'une part, sur une extrémité frontale du boulon de verrouillage (29) et, d'autre part, dans a douille de guidage (34), en ce que la douille de guidage (34) présente un évidement (35) s'étendant sur une partie de périphérie, pour laisser le passage à un organe de blocage (36) de l'unité de blocage (32), et le boulon de verrouillage (29) présente une gorge d'encliquetage (37) de pourtour, pour la pénétration de l'organe de blocage (36), et en ce que l'évidement (35), ménagé dans la douille de guidage (34), et la gorge d'encliquetage (37), ménagée dans le boulon de verrouillage (29), sont disposés de manière que, lorsque le boulon de verrouillage (29) se trouve en position de base, ils se trouvent dans le même plan de coupe transversal, orienté à angle droit par rapport aux axes de la douille de guidage (34) et du boulon de verrouillage (29).

3. Siège selon la revendication 1 ou 2, caractérisé en que l'unité de blocage (32) porte un levier coudé (38), disposé de façon à pouvoir pivoter autour d'un axe de pivotement orienté parallèlement au boulon de verrouillage (29), levier coudé dont une branche (381), longue, porte l'organe de blocage (36) et dont l'autre branche (382), courte, porte un profilé de glissement (27) appuyant sur la ceinture de sécurité (19), et présente un ressort de bloc de blocage (ressort de torsion 39) qui sollicite le levier coudé (38) de manière que l'organe de blocage (36) pénètre dans la gorge d'encliquetage (37), et en ce que le levier coudé (38) est disposé, par rapport à la ceinture de sécurité (19), de manière que, lorsque l'organe de blocage (36) s'engage dans la gorge d'encliquetage (37), le profilé de glissement (27), appuyant sur la ceinture de sécurité de (19), contraint le tronçon de ceinture (191), s'étendant entre le dispositif enrouleur de ceinture (18) et l'élément de renvoi de ceinture (21), à prendre une allure à angle obtus, l'angle obtus étant réalisé sur le profilé de glissement (27).

4. Siège selon l'une des revendications 1 à 3, caractérisé en ce que le dossier (11) présente un cadre de dossier (12), avec un tube transversal inférieur et un tube transversal supérieur (14, 15), et deux montants latéraux (16) reliant ensemble les tubes transversaux (14, 15), ainsi qu'un rembourrage de dossier (13) couvrant le cadre de dossier (12), et en ce que le montant latéral (16) situé le plus proche de la paroi latérale (22) de la carrosserie fait saillie sur l'arête supérieure du rembourrage de dossier (13) et porte, sur sa partie en sallie (161), un capuchon (23) arrivant jusqu'au rembourrage de dossier (13), capuchon dans lequel est réalisée une nervure transversale (24) constituant l'élément de renvoi de ceinture (121).

5. Siège selon la revendication 4, caractérisé en ce qu'une surface de guidage (25), réalisée dans le capuchon (23), pour la ceinture de sécurité (19), prend appui sur la face arrière de la partie en saillie (161) du montant latéral (16), et en ce qu'une ouverture de passage (26), prévue pour la ceinture de sécurité (19), est disposée dans la face avant, tournée vers la face avant de dossier, du capuchon (23).

6. Siège selon les revendications 3 et 4 ou 5, caractérisé en ce que le levier coudé (38) est disposé, de façon à pouvoir tourner sur le tube transversal supérieur (14), près du montant latéral (16) portant l'élément de renvoi de ceinture (21), en ce que le ressort de blocage est réalité sous la forme d'un ressort de torsion (39) monté sur le tube transversal supérieur (14), ressort prenant appui, d'une part, sur le montant latéral (16) et, d'autre part, sur la branche longue (381) du levier coudé (38), et en ce que le profilé de guidage (27), maintenu sur la branche courte (382) du levier coudé (38) est d'une longueur supérieure à la largeur de la ceinture de sécurité (19).

7. Siège selon la revendication 6, caractérisé en ce que la précontrainte élastique du ressort de torsion (39) est d'une valeur telle que la force élastique, maintenant l'organe de blocage (36) dans la gorge de blocage (37) du boulon de verrouillage (29), est légèrement inférieure à la force de réaction minimale, agissant sur le profilé de glissement (27) dans la direction de pivotement du levier coudé (38), de la ceinture de sécurité (19), provoquée à la mise en action du mécanisme de verrouillage d'extraction de ceinture dans le dispositif enrouleur de ceinture (18), par un ralentissement extrême du véhicule.

8. Siège selon l'une des revendications 4 à 7, caractérisé en ce que le dispositif rouleur de ceinture (18) est fixé sur le tube transversal inférieur (15) du cadre de dossier (12).

9. Siège selon l'une des revendications 1 à 8, caractérisé en ce qu'une butée (40), limitant la course de déplacement du boulon de verrouillage (29), est disposée au fond du trou d'emprisonnement (30).

10. Siège selon l'une des revendications 3 à 9, caractérisé en ce que l'organe de blocage (36) est constitué par l'extrémité libre elle même de la branche longue (381) du levier coudé (38).
